# EUROPÄISCHE PATENTSCHRIFT

(11) **EP 3 156 680 B1**
(45) Veröffentlichungstag und Bekanntmachung des Hinweises auf die Patenterteilung: **16.08.2023**
(21) Anmeldenummer: 16001881.8
(22) Anmeldetag: 26.08.2016
(51) Int. Cl.: F16D 13/62

(54) **KUPPLUNG MIT ABSTIMMELEMENT ZUR BEEINFLUSSUNG DES AKUSTISCHEN VERHALTENS DER KUPPLUNG**
CLUTCH WITH TUNING ELEMENT FOR INFLUENCING THE ACOUSTIC BEHAVIOUR OF THE CLUTCH
EMBRAYAGE COMPRENANT UN ELEMENT REGLABLE DESTINE A INFLUENCER LE COMPORTEMENT ACOUSTIQUE DU EMBRAYAGE

(30) Priorität: 15.10.2015 DE 102015013428
(43) Veröffentlichungstag der Anmeldung: 19.04.2017
(73) Patentinhaber: MAN Truck & Bus SE, 80995 München (DE)
(72) Erfinder: Tröbst, Steffen, 07646 Waldeck (DE)
(74) Vertreter: v. Bezold & Partner Patentanwälte - PartG mbB

(56) Entgegenhaltungen:
- EP-A2- 1 619 390
- CN-A- 102 237 745
- CN-U- 205 401 583
- DE-A1- 19 701 178
- DE-A1-102012 220 732
- DE-U1- 7 725 998

## Beschreibung

Die Erfindung betrifft eine Kupplung, insbesondere eine Lamellenkupplung, vorzugsweise für eine Übertragung von Drehmomenten, zweckmäßig Wechseldrehmomenten, mit insbesondere ausgeprägter Drehungleichförmigkeit zwischen einer Kraft- und einer Antriebsmaschine.

Lamellenkupplungen bestehen im Allgemeinen aus einem Kupplungstopf, einer Kupplungsnabe und Lamellenpaketen, wobei jeweils ein Lamellenpaket mit der Kupplungsnabe und ein Lamellenpaket mit dem Kupplungstopf formschlüssig verbunden ist. Wenn die Lamellenpakete gegeneinander gepresst werden, findet eine Kraftübertragung vom Kupplungstopf über die Lamellenpakete auf die Kupplungsnabe statt. Um ein Schalten der Lamellenkupplung zur Herstellung beziehungsweise zum Trennen des Kraftschlusses zu ermöglichen, muss in den formschlüssigen Verbindungen der Lamellenpakete mit ihren angeschlossenen Bauteilen (Kupplungstopf mit dem einen Lamellenpaket sowie Kupplungsnabe mit dem anderen Lamellenpaket) ein radiales Spiel im Formschluss vorhanden sein. Dieses Spiel erzeugt einen Anlagewechsel der formschlüssig verbundenen Bauteile, was zu insbesondere schlagenden Geräuschen zwischen den Flanken der formschlüssigen Verbindungen führen kann. Vor allem der Kupplungstopf strahlt durch diese transiente Anregung Frequenzanteile ab, die von den Eigenformen, Eigenfrequenzen und den modalen Dämpfungen dieser Eigenformen direkt abhängen und mit den entstehenden Körperschallanteilen korrelieren. Zum allgemeinen Stand der Technik können die DE 77 25 998 U1, die CN 205 401 583 U, die CN 102 237 745 A und die DE 197 01 178 A1 genannt werden.

Eine Aufgabe der Erfindung ist es, unerwünschte Kupplungsgeräusche zu vermeiden oder zu reduzieren, vorzugsweise in bevorzugte und/oder bestimmte Funktions-/Betriebsgeräusche zu modifizieren bzw. zu verstimmen.

Diese Aufgabe wird mit den Merkmalen des Hauptanspruchs gelöst. Vorteilhafte Weiterbildungen der Erfindung können den Unteransprüchen und der folgenden Beschreibung bevorzugter Ausführungsformen der Erfindung entnommen werden.

Die Erfindung betrifft eine Kupplung, insbesondere eine Lamellenkupplung, mit einem äußeren Kupplungsteil und einem inneren Kupplungsteil. Das äußere Kupplungsteil ist vorzugsweise ein Kupplungstopf, insbesondere ein äußerer Lamellenträger. Das innere Kupplungsteil ist vorzugsweise eine Kupplungsnabe, insbesondere ein innerer Lamellenträger.

Das äußere Kupplungsteil und das innere Kupplungsteil sind vorzugsweise im Wesentlichen koaxial zueinander angeordnet.

Die Kupplung zeichnet sich insbesondere dadurch aus, dass ein vorzugsweise im Wesentlichen ringförmiges Abstimmelement das äußere Kupplungsteil zweckmäßig zumindest abschnittsweise ummantelt. Das Abstimmelement dient zur Beeinflussung des akustischen Verhaltens der Kupplung, insbesondere des akustischen Verhaltens des äußeren Kupplungsteils. Das Abstimmelement dient dabei insbesondere zur Beeinflussung des psychoakustischen Verhaltens und/oder zur zweckmäßig außenseitigen Ummantelung des äußeren Kupplungsteils.

Durch das Abstimmelement ist es zweckmäßig möglich, dass unerwünschte Geräusche der Kupplung reduziert und/oder in bevorzugte Funktion- und/oder Betriebsgeräusche verstimmt werden.

Die Kupplung kann mittels des Abstimmelements insbesondere durch eine Masse- und/oder Steifigkeitsbelegung des äußeren Kupplungsteils so abgestimmt werden, dass Eigenschwingformen und/oder Eigenfrequenzen des äußeren Kupplungsteils so einstellbar sind, dass eine Luftschallabstrahlung minimierbar ist und/oder in einen Frequenzbereich verschiebbar ist, der als nicht störend wahrgenommen wird.

Das Material und/oder die Geometrie des Abstimmelements beeinflussen seine mechanischen partiellen Masse-, Steifigkeits- und/oder Fügestellungsdämpfungs-Eigenschaften.

Das Abstimmelement kann zweckmäßig Eigenformen und/oder Eigenfrequenzen der Kupplungsgeräusche, insbesondere des äußeren Kupplungsteils, so verstimmen bzw. modifizieren, dass ein bevorzugtes Funktions- und/oder Betriebsgeräusch erreicht wird, z. B. dadurch, dass durch Bedämpfung der Eigenformen und/oder Eigenfrequenzen das akustische Verhalten der Kupplung, insbesondere des äußeren Kupplungsteils, gestaltet werden kann.

Schwingfähige Systeme können zweckmäßig diskret durch eine Matrix von n*m gekoppelten Feder-Masse-Systemen modal beschrieben werden.

Die Gestaltung des akustischen Verhaltens kann insbesondere im Wesentlichen durch gezielte Beeinflussung der Impulshaftigkeit und/oder der Modulation einzelner Kupplungsgeräusch-Frequenzgruppen erfolgen. Alternativ oder ergänzend kann auf eine Betonung und/oder Unterdrückung definierter, anwendungsbezogener Kupplungsgeräusch-Frequenzgruppen dadurch abgezielt werden, dass hierdurch die Schwankungsstärke und/oder die Rauigkeit des emittierten Kupplungs-Gesamtgeräusches durch die Beeinflussung der Modalparameter durch Material- und/oder Fügestellungdämpfung (Fügestellendämpfung) und alternativ oder ergänzend Elastizitäts-und/oder Schubmodul des Abstimmelementes eingestellt werden kann.

Das Abstimmelement ermöglicht insbesondere, dass die durch die Material- und/oder Fügestellungdämpfung sowie alternativ oder ergänzend das Elastizitäts-und/oder Schubmodul entstehenden Masse-, Steifigkeits- und/oder Dämpfungsmatrizen der Kupplung, insbesondere des äußeren Kupplungsteils, zweckmäßig unabhängig von den Werkstoffeigenschaften davon, derart beeinflussbar sind, dass sich die Modalparameter durch die Unterschiede bezüglich der Material- und/oder Fügestellungdämpfung sowie alternativ oder ergänzend dem Elastizitäts- und/oder Schubmodul im Abstimmelement und äußeren Kupplungsteil vorzugsweise dahingehend ändern, dass die psychoakustischen Parameter in Summe zu einem bevorzugten Kupplungs-Funktions- bzw. Betriebsgeräusch führen, so dass z. B. unerwünschte Kupplungsgeräusche reduziert oder vermieden werden.

Um das werkstoffunabhängig, insbesondere unabhängig von den Werkstoffeigenschaften des äußeren Kupplungsteils zu erreichen, kann das Abstimmelement auf das äußere Kupplungsteil derart aufgebracht sein, dass die Fügestellendämpfung zwischen äußerem Kupplungsteil und Abstimmelement durch den Reibkoeffizienten dazwischen und/oder mittels Tangentialspannung im äußeren Kupplungsteil und Abstimmelement beeinflusst wird (zum Beispiel eingestellt wird). Das führt zweckmäßig zu einer zweckmäßig direkten Beeinflussung der Dämpfungsmatrix der Gesamtanordnung aus Kupplung mit Abstimmelement. Zusätzlich kann diese Dämpfung durch Auswahl des Materials (insbesondere Werkstoffes) des Abstimmelements und dessen spezifischen Werkstoffdämpfung bevorzugt gewählt werden. Die Fügestellendämpfung im Reibspalt zwischen dem äußeren Kupplungsteil und dem Abstimmelement wird insbesondere durch Mikrobewegungen verursacht.

Das Abstimmelement kann auf das äußere Kupplungsteil vorzugsweise reibungsbehaftet aufgebracht sein, z. B. an dem äußeren Kupplungsteil reibungsbehaftet anliegen, in Umfangsrichtung des äußeren Kupplungsteils.

Erfindungsgemäss, ist das Abstimmelement aus zumindest zwei unterschiedlichen Materialien ausgebildet ist, z. B. unterschiedlich in Bezug auf Masse, Steifigkeit und/oder Geräuschdämpfung.

Weiterhin können zweckmäßig die tangentiale Vorspannung und elastische Kenngrößen (zum Beispiel der E-Modul) des Abstimmelements (insbesondere dessen Werkstoffs bzw. Materials) die Steifigkeitsmatrix von äußerem Kupplungsteil mit aufgebrachtem Abstimmelement beeinflussen.

Das Abstimmelement kann zum Beispiel ein Elastomer, unterschiedliche Elastomere, einen duro-plastischen Werkstoff, unterschiedliche duro-plastische Werkstoffe, einen thermo-plastischen Werkstoff und/oder unterschiedliche thermo-plastische Werkstoffe aufweisen. In das Material können zusätzlich z. B. zumindest ein Materialzusatz, ein festigkeitssteigernder Zusatz und/oder Fasern eingearbeitet sein.

Alternativ oder ergänzend weist das Abstimmelement unterschiedliche Schichtdicken auf. Ergänzend kann das Abstimmelement eine zweckmäßig unterschiedliche partielle Masseverteilung aufweisen. Es kann somit an zumindest zwei Teilabschnitten eine unterschiedliche Schichtdicke und/oder partielle Masseverteilung umfassen. Dadurch kann insbesondere die Massenmatrix der Kombination aus äußerem Kupplungsteil und Abstimmelement beeinflusst werden.

Durch eine partielle Masseverteilung des Abstimmelements kann z. B. eine drehzahladaptive akustische Beeinflussung erzielt werden und zwar insbesondere dadurch, dass, aufgrund einer Drehzahl der Kupplung, insbesondere des äußeren Kupplungsteils, Fliehkräfte entweder die Abstimmelement-Vorspannung erhöhen oder absenken.

Das Abstimmelement kann im Wesentlichen vorspannungsfrei auf das äußere Kupplungsteil aufgebracht sein, so dass die Vorspannung im Wesentlichen 0 betragen kann. Alternativ kann das Abstimmelement mit Vorspannung auf das äußere Kupplungsteil aufgebracht sein, insbesondere aufgespannt sein.

Es ist möglich, dass das Abstimmelement thermisch und/oder chemisch auf das äußere Kupplungsteil aufgeschrumpft ist. Alternativ oder ergänzend kann das Abstimmelement mechanisch auf das äußere Kupplungsteil vorgespannt sein.

Das Abstimmelement ist vorzugsweise ein im Wesentlichen ringförmiger Abstimmring.

Das äußere Kupplungsteil ist vorzugsweise im Wesentlichen ringförmig ausgebildet.

Das innere Kupplungsteil ist vorzugsweise im Wesentlichen ringförmig ausgebildet.

Die Kupplung ist vorzugsweise eine Lamellenkupplung, so dass Lamellenpakete zwischen dem äußeren Kupplungsteil und dem inneren Kupplungsteil angeordnet sein können, vorzugsweise jeweils ein Lamellenpaket mit dem äußeren Kupplungsteil und ein Lamellenpaket mit dem inneren Kupplungsteil formschlüssig verbindbar sind. Es ist möglich, dass eine Kraftübertragung vom äußeren Kupplungsteil über die Lamellenpakete auf das innere Kupplungsteil stattfindet, wenn die Lamellenpakete gegeneinander gepresst werden. Es ist möglich, dass das äußeres Kupplungsteil als Kupplungsabtrieb dient und das innere Kupplungsteil als Kupplungsantrieb oder umgekehrt.

Zu erwähnen ist nochmals, dass das Abstimmelement, insbesondere material- und/oder geometriebedingt, zweckmäßig zur Beeinflussung des akustischen Verhaltens der Kupplung dient und zwar vorzugsweise mittels Beeinflussung der Fügestellendämpfung zwischen Abstimmelement und äußerem Kupplungsteil, der Steifigkeit und/oder der Masse der das äußere Kupplungsteil und das Abstimmelement umfassenden Anordnung.

Die Kupplung dient insbesondere zur Übertragung von Drehmomenten, z. B. Wechseldrehmomenten, mit insbesondere ausgeprägter Drehungleichförmigkeit zwischen einer Kraft- und einer Arbeitsmaschine.

Die vorstehend beschriebenen Merkmale und Ausführungsformen der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen in Verbindung mit den beigefügten Figuren.
- Figur 1: zeigt eine perspektivische Ansicht einer Kupplung gemäß einer Ausführungsform der Erfindung;
- Figur 2: zeigt eine perspektivische Schnittansicht der Kupplung der Figur 1; und
- Figur 3: zeigt eine perspektivische, explosionsartige Ansicht der Kupplung der Figuren 1 und 2.

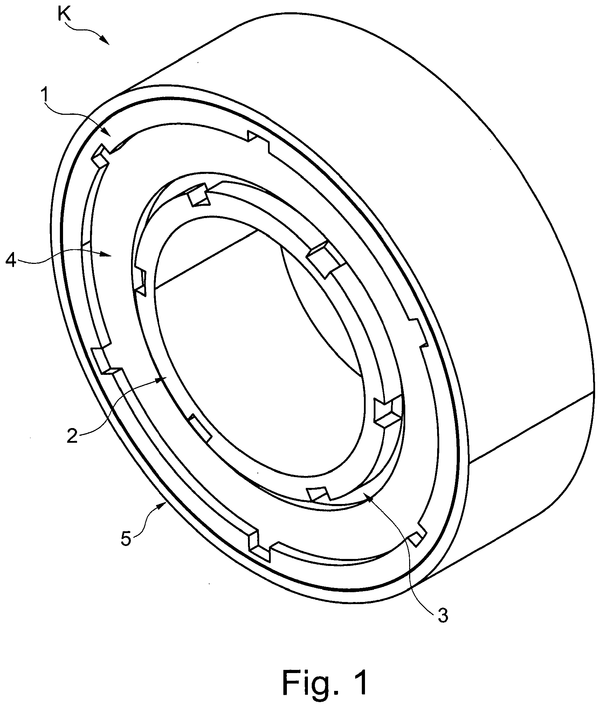

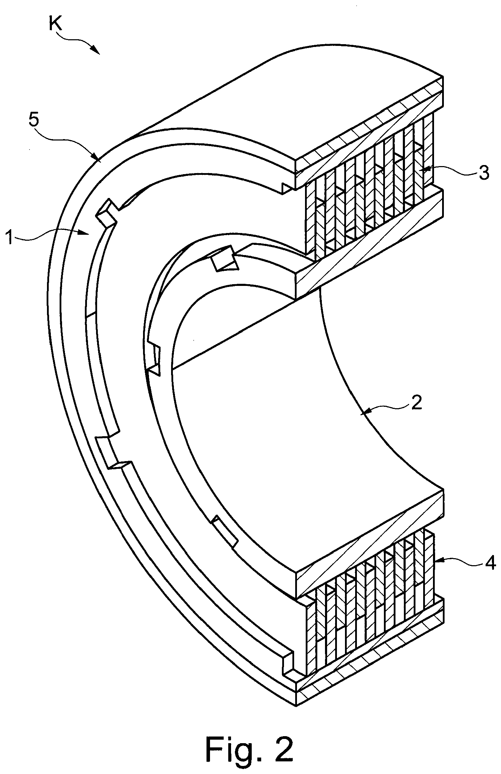

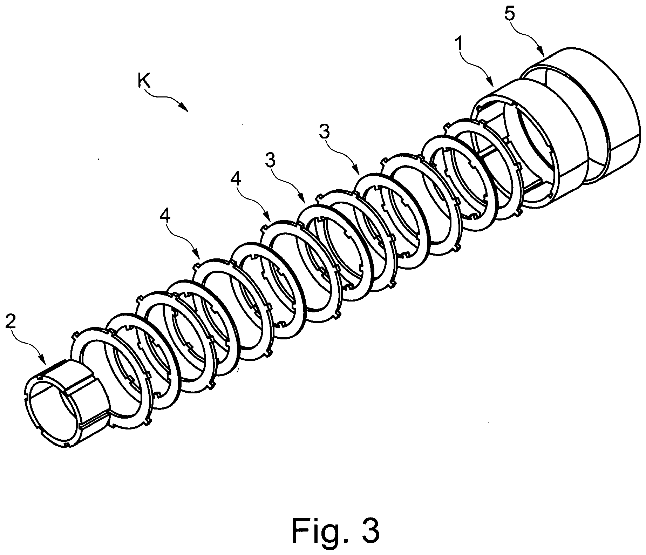

Figur 1 zeigt eine perspektivische Ansicht einer Kupplung K gemäß einer Ausführungsform der Erfindung. Die Kupplung K wird nachfolgend unter gemeinsamer Bezugnahme auf die Figuren 1 bis 3 beschrieben.

Die Kupplung K ist als Lamellenkupplung ausgeführt (entweder trocken oder im Ölbad) mit einem zweckmäßig ringförmigen Kupplungstopf 1 (äußeres Kupplungsteil) und einer zweckmäßig ringförmigen Kupplungsnabe 2 (inneres Kupplungsteil). Lamellenpakete 3 und 4, die ebenfalls zweckmäßig ringförmig ausgebildet sind, sind zwischen den Kupplungstopf 1 und die Kupplungsnabe 2 zwischengeschaltet. Das Lamellenpaket 4 ist mit dem Kupplungstopf 1 formschlüssig verbunden und das Lamellenpaket 3 ist mit der Kupplungsnabe 2 formschlüssig verbunden. Werden die Lamellenpakete 3 und 4 gegeneinander gepresst, so findet eine Kraftübertragung vom Kupplungstopf 1 über die Lamellenpakete 3 und 4 auf die Kupplungsnabe 2 statt. Um ein Schalten der Kupplung K zur Herstellung beziehungsweise zum Trennen des Kraftschlusses zu ermöglichen, ist in den formschlüssigen Verbindungen der Lamellenpakete 3 und 4 mit dem Kupplungstopf 1 beziehungsweise der Kupplungsnabe 2 ein radiales Spiel in den formschlüssigen Verbindungen vorhanden.

Das radiale Spiel kann einen Anlagewechsel der formschlüssig verbundenen Bauteile erzeugen, was zu unerwünschten zum Beispiel schlagenden Geräuschen zwischen den Flanken der formschlüssigen Verbindungen führt. Vor allem der Kupplungstopf 1 strahlt durch transiente Anregung Frequenzanteile ab, die von den Eigenformen, Eigenfrequenzen und den modalen Dämpfungen dieser Eigenformen insbesondere direkt abhängen und mit den entstehenden Körperschallanteilen korrelieren.

Die Kupplung K ist deshalb mit einem Abstimmring 5 (Abstimmelement) zur Beeinflussung des akustischen Verhaltens der Kupplung K, insbesondere des Kupplungstopfs 1 versehen. Der Abstimmring 5 ummantelt den Kupplungstopf 1 und ist, zweckmäßig direkt und reibungsbehaftet, auf den Kupplungstopf 1 aufgebracht, z. B. mit Vorspannung oder im Wesentlichen vorspannungsfrei.

Schwingfähige Systeme wie zum Beispiel die Kupplung K können diskret durch eine Matrix von n*m gekoppelten Feder-Masse-Systemen modal beschrieben werden.

Mittels des Abstimmelements 5 können zuvor-genannte Eigenformen so verstimmt werden, dass ein bevorzugtes Funktions- bzw. Betriebsgeräusch dadurch erreicht wird, dass durch die Bedämpfung der Eigenformen und Frequenzen das akustische Verhalten des Kupplungstopfs 1 besonders gestaltet wird. Im Wesentlichen geschieht diese Gestaltung durch die gezielte Beeinflussung der Impulshaftigkeit und der Modulation einzelner Frequenzgruppen. Weiterhin wird auf die Betonung und Unterdrückung definierter, anwendungsbezogener Frequenzgruppen dadurch abgezielt, dass hierdurch die Schwankungsstärke und die Rauigkeit des emittierten Gesamtgeräusches durch die Beeinflussung der Modalparameter durch Material- und Fügestellungdämpfung (Fügestellendämpfung) sowie Elastizitäts-und Schubmodul des Abstimmelementes 5 eingestellt werden kann.

Mittels des Abstimmrings 5 können die durch Material- und Fügestellungdämpfung sowie Elastizitäts-und Schubmodul entstehenden Masse-, Steifigkeits- und Dämpfungsmatrizen des Kupplungstopfs 1, unabhängig von seinen Werkstoffeigenschaften, derart beeinflusst werden, dass sich die Modalparameter der Kombination äußerer Kupplungsteil 1 / Abstimmelement 5 bevorzugt dahingehend ändern, dass die psychoakustischen Parameter in Summe zu einem bevorzugten Funktions- und Betriebsgeräusch führen beziehungsweise ein unerwünschtes Geräusch reduziert wird.

Um dies, insbesondere unabhängig von den Werkstoffeigenschaften des Kupplungstopfs 1 zu erreichen, wird der Abstimmring 5 derart auf den Kupplungstopf 1 aufgebracht, dass die Fügestellendämpfung zwischen dem Abstimmring 5 und dem Kupplungstopf 1 durch den Reibkoeffizienten dazwischen und mittels Tangentialspannung im Kupplungstopf 1 und im Abstimmring 5 einstellbar ist. Das führt zu einer direkten Beeinflussung der Dämpfungsmatrix der Gesamtanordnung. Zusätzlich wird die Dämpfungsmatrix der Anordnung aus äußerem Kupplungsteil 1 und Abstimmring 5 durch Auswahl des Materials (insbesondere Werkstoffes) des Abstimmrings 5 und seiner spezifischen Werkstoffdämpfung bevorzugt gewählt.

Weiterhin kann die tangentiale Vorspannung des Abstimmrings 5 und elastische Kenngrößen (z. B. E-Modul) des Materials (insbesondere Werkstoffs) des Abstimmrings 5 die Steifigkeitsmatrix der Anordnung äußerer Kupplungsteil 1 / Abstimmring 5 beeinflussen.

Eine unterschiedliche partielle Masseverteilung und Schichtdicke des Abstimmrings 5 können zur Beeinflussung der Massenmatrix führen.

Der Abstimmring 5 ist vorzugsweise aus einem Elastomer oder einem duro- oder thermo-plastischen Werkstoff oder beiden ausgeführt. Die Zugabe von füll- und/oder festigkeitssteigernden Zusätzen und/oder Fasern kann ebenfalls gewünschte, vorzugsweise psychoakustische Eigenschaften herbeiführen.

Es ist möglich, dass die tangentiale Vorspannung z. B. durch einen lose auf den Kupplungstopf 1 aufgelegten Abstimmring 5 z. B. in Form eines Schrumpfschlauchs erfolgt, der durch thermische und/oder chemische Behandlung auf den Kupplungstopf 1 aufgeschrumpft wird. Eine mechanische Vorspannung ist ebenfalls möglich.

Die Vorspannung des Abstimmrings 5 kann auch den Wert von im Wesentlichen 0 annehmen, so dass nur die Werkstoffdämpfung und/oder die partielle Masseverteilung des Abstimmrings 5 zum Tragen kommt.

Außerdem kann eine drehzahladaptive Anpassung der psychoakustischen Gestaltung der Funktions- und Betriebsgeräusche dadurch erreicht werden, dass durch Fliehkräfte der Tangentialspannung direkt und/oder indirekt entgegengewirkt wird.

Alternativ oder ergänzend ist eine temperaturabhängige Anpassung der Geräuschemission über eine Anpassung der thermodynamischen Eigenschaften des Abstimmrings 5 zu erreichen.

### Bezugszeichenliste

- 1: Äußeres Kupplungsteil, insbesondere Kupplungstopf
- 2: Inneres Kupplungsteil, insbesondere Kupplungsnabe
- 3: Lamellenpaket
- 4: Lamellenpaket
- 5: Abstimmelement, insbesondere Abstimmring
- K: Kupplung, insbesondere Lamellenkupplung

## Patentansprüche

1. Kupplung (K), insbesondere Lamellenkupplung, mit einem äußeren Kupplungsteil (1), vorzugsweise einem Kupplungstopf, und einem inneren Kupplungsteil (2), vorzugsweise einer Kupplungsnabe, wobei ein Abstimmelement (5) zur Beeinflussung des akustischen Verhaltens der Kupplung (K) das äußere Kupplungsteil (1) ummantelt, wobei Lamellenpakete (2, 4) zwischen dem äußeren Kupplungsteil (1) und dem inneren Kupplungsteil (2) angeordnet sind, **dadurch gekennzeichnet, dass** das Abstimmelement (5) aus zumindest zwei unterschiedlichen Materialien ausgebildet ist und/oder unterschiedliche Schichtdicken aufweist.

2. Kupplung (K) nach Anspruch 1, **dadurch gekennzeichnet, dass** das Abstimmelement (5) auf das äußere Kupplungsteil (1) aufgebracht ist, vorzugsweise reibungsbehaftet.

3. Kupplung (K) nach Anspruch 1 oder 2, **dadurch gekennzeichnet, dass** das Abstimmelement (5) auf das äußere Kupplungsteil (1) so aufgebracht ist, dass eine Fügestellendämpfung zwischen äußerem Kupplungsteil (1) und Abstimmelement (5) durch den Reibkoeffizienten und/oder mittels Tangentialspannung im äußeren Kupplungsteil (1) und Abstimmelement (5) beeinflusst wird.

4. Kupplung (K) nach einem der vorhergehenden Ansprüche, **dadurch gekennzeichnet, dass** das Abstimmelement (5) zumindest eines von Folgenden aufweist:
a) ein Elastomer oder unterschiedliche Elastomere,
b) einen duro-plastischen Werkstoff oder unterschiedliche duro-plastische Werkstoffe
c) einen thermo-plastischen Werkstoff oder unterschiedliche thermo-plastische Werkstoffe.

5. Kupplung (K) nach Anspruch 4, **dadurch gekennzeichnet, dass** in das Abstimmelement (5) zumindest ein Materialzusatz, ein festigkeitssteigernder Zusatz und/oder Fasern eingearbeitet sind.

6. Kupplung (K) nach einem der vorhergehenden Ansprüche, **dadurch gekennzeichnet, dass** das Abstimmelement (5) eine partielle Masseverteilung aufweist.

7. Kupplung (K) nach einem der vorhergehenden Ansprüche, **dadurch gekennzeichnet, dass** das Abstimmelement (5) im Wesentlichen vorspannungsfrei auf das äußere Kupplungsteil (1) aufgebracht ist.

8. Kupplung (K) nach einem der Ansprüche 1 bis 6, **dadurch gekennzeichnet, dass** das Abstimmelement (5) mit Vorspannung auf das äußere Kupplungsteil (1) aufgebracht ist.

9. Kupplung (K) nach einem der vorhergehenden Ansprüche, **dadurch gekennzeichnet, dass** das Abstimmelement (5) thermisch und/oder chemisch auf das äußere Kupplungsteil (1) aufgeschrumpft ist.

10. Kupplung (K) nach einem der vorhergehenden Ansprüche, **dadurch gekennzeichnet, dass** das Abstimmelement (5) mechanisch auf das äußere Kupplungsteil (1) vorgespannt ist.

11. Kupplung (K) nach einem der vorhergehenden Ansprüche, **dadurch gekennzeichnet, dass** das Abstimmelement (5) ein Abstimmring ist und vorzugsweise das äußere Kupplungsteil (1) und/oder das innere Kupplungsteil (2) ringförmig ausgebildet sind.

## Claims

1. A clutch (K), in particular a multi-disk clutch, having an outer clutch part (1), preferably a clutch pot, and an inner clutch part (2), preferably a clutch hub, wherein a tuning element (5) for influencing the acoustic behavior of the clutch (K) surrounds the outer clutch part (1), wherein disk packs (2, 4) are arranged between the outer coupling part (1) and the inner coupling part (2), **characterized in that** the tuning element (5) is formed from at least two different materials and/or has different layer thicknesses.

2. Clutch (K) according to claim 1, **characterized in that** the tuning element (5) is applied to the outer clutch part (1), preferably frictionally.

3. Clutch (K) according to claim 1 or 2, **characterized in that** the tuning element (5) is applied to the outer clutch part (1) such that a joint damping between outer clutch part (1) and tuning element (5) is influenced by the friction coefficient and/or by means of tangential stress in the outer clutch part (1) and tuning element (5).

4. Clutch (K) according to any one of the preceding claims, **characterized in that** the tuning element (5) comprises at least one of the following:
a) an elastomer or different elastomers,
b) a thermosetting material or different thermosetting materials,
c) a thermoplastic material or different thermoplastic materials.

5. Clutch (K) according to claim 4, **characterized in that** at least one material additive, a strength-increasing additive and/or fibers are incorporated in the tuning element (5).

6. Clutch (K) according to one of the preceding claims, **characterized in that** the tuning element (5) has a partial mass distribution.

7. Clutch (K) according to one of the preceding claims, **characterized in that** the tuning element (5) is applied to the outer clutch part (1) substantially without pretension.

8. Clutch (K) according to one of claims 1 to 6, **characterized in that** the tuning element (5) is applied to the outer clutch part (1) with pretension.

9. Clutch (K) according to one of the preceding claims, **characterized in that** the tuning element (5) is thermally and/or chemically shrunk onto the outer clutch part (1).

10. Clutch (K) according to one of the preceding claims, **characterized in that** the tuning element (5) is mechanically pretensioned on the outer clutch part (1).

11. Clutch (K) according to one of the preceding claims, **characterized in that** the tuning element (5) is a tuning ring and preferably the outer clutch part (1) and/or the inner clutch part (2) are formed ring-shaped.

## Revendications

1. Embrayage (K), notamment embrayage à lamelles, comprenant une partie d'embrayage extérieure (1), de préférence un pot d'embrayage, et une partie d'embrayage intérieure (2), de préférence un moyeu d'embrayage, un élément de réglage (5) destiné à influencer le comportement acoustique de l'embrayage (K) enveloppant la partie d'embrayage extérieure (1), des paquets de lamelles (2, 4) étant agencés entre la partie d'embrayage extérieure (1) et la partie d'embrayage intérieure (2), **caractérisé en ce que** l'élément de réglage (5) est réalisé en au moins deux matériaux différents et/ou présente des épaisseurs de couche différentes.

2. Embrayage (K) selon la revendication 1, **caractérisé en ce que** l'élément de réglage (5) est appliqué sur la partie d'embrayage extérieure (1), de préférence avec friction.

3. Embrayage (K) selon la revendication 1 ou 2, **caractérisé en ce que** l'élément de réglage (5) est appliqué sur la partie d'embrayage extérieure (1) de telle sorte qu'un amortissement de joint entre la partie d'embrayage extérieure (1) et l'élément de réglage (5) est influencé par le coefficient de frottement et/ou au moyen d'une tension tangentielle dans la partie d'embrayage extérieure (1) et l'élément de réglage (5).

4. Embrayage (K) selon l'une quelconque des revendications précédentes, **caractérisé en ce que** l'élément de réglage (5) présente au moins l'un des éléments suivants :
a) un élastomère ou différents élastomères,
b) un matériau thermodurcissable ou différents matériaux thermodurcissables,
c) un matériau thermoplastique ou différents matériaux thermoplastiques.

5. Embrayage (K) selon la revendication 4, **caractérisé en ce qu'**au moins un additif de matériau, un additif augmentant la résistance et/ou des fibres sont incorporés dans l'élément de réglage (5).

6. Embrayage (K) selon l'une quelconque des revendications précédentes, **caractérisé en ce que** l'élément de réglage (5) présente une répartition de masse partielle.

7. Embrayage (K) selon l'une quelconque des revendications précédentes, **caractérisé en ce que** l'élément de réglage (5) est appliqué essentiellement sans précontrainte sur la partie d'embrayage extérieure (1) .

8. Embrayage (K) selon l'une quelconque des revendications 1 à 6, **caractérisé en ce que** l'élément de réglage (5) est appliqué avec précontrainte sur la partie d'embrayage extérieure (1).

9. Embrayage (K) selon l'une quelconque des revendications précédentes, **caractérisé en ce que** l'élément de réglage (5) est fretté thermiquement et/ou chimiquement sur la partie d'embrayage extérieure (1).

10. Embrayage (K) selon l'une quelconque des revendications précédentes, **caractérisé en ce que** l'élément de réglage (5) est précontraint mécaniquement sur la partie d'embrayage extérieure (1).

11. Embrayage (K) selon l'une quelconque des revendications précédentes, **caractérisé en ce que** l'élément de réglage (5) est un anneau de réglage et, de préférence, la partie d'embrayage extérieure (1) et/ou la partie d'embrayage intérieure (2) sont réalisées sous forme annulaire.
